# EUROPÄISCHE PATENTSCHRIFT

(11) **EP 3 686 405 B1**
(45) Veröffentlichungstag und Bekanntmachung des Hinweises auf die Patenterteilung: **13.01.2021**
(21) Anmeldenummer: 20151864.4
(22) Anmeldetag: 15.01.2020
(51) Int. Cl.: F01N 3/20, F01N 3/025

(54) **ABGASHEIZELEMENT**
EXHAUST GAS HEATING ELEMENT
ÉLÉMENT CHAUFFANT DE GAZ D'ÉCHAPPEMENT

(30) Priorität: 24.01.2019 DE 102019101679
(43) Veröffentlichungstag der Anmeldung: 29.07.2020
(62) Teilanmeldung aus: 20210555.7
(73) Patentinhaber: Eberspächer Exhaust Technology GmbH, 66539 Neunkirchen (DE)
(72) Erfinder: Gaiser, Gerd, 72768 Reutlingen (DE)
(74) Vertreter: Ruttensperger Lachnit Trossin Gomoll

(56) Entgegenhaltungen:
- EP-A1- 2 256 312
- US-A1- 2005 274 107
- US-A1- 2018 119 591

## Beschreibung

Die vorliegende Erfindung betrifft ein Abgasheizelement für eine Abgasanlage einer Brennkraftmaschine.

Die immer strenger werdenden Anforderungen hinsichtlich des Schadstoffausstoßes von Brennkraftmaschinen erfordern spezielle Maßnahmen, welche dafür sorgen, dass auch in der Startphase einer Brennkraftmaschine bei kalten Komponenten einer Abgasanlage der Schadstoffausstoß gesenkt werden kann. In einer derartigen Startphase sind insbesondere die in einer Abgasanlage angeordneten Katalysatoreinheiten, wie zum Beispiel ein Dreiwegekatalysator, ein Oxidationskatalysator oder ein SCR-Katalysator, bei einer Temperatur, die im Allgemeinen nicht zum Auslösen der darin jeweils durchzuführenden katalytischen Reaktion ausreicht. Um diesem Problem entgegenzutreten, kann zum Erhöhen der Abgastemperatur und somit zum Erreichen einer schnelleren Erwärmung derartiger Katalysatoren bzw. auch Partikelfilter beispielsweise bei Diesel-Brennkraftmaschinen die Kraftstoffeinspritzung zu einem späten Zeitpunkt erfolgen bzw. bei Otto-Brennkraftmaschinen der Zündwinkel auf spät gestellt werden, was jedoch wesentliche Eingriffe in das Motormanagement erforderlich macht.

Die US 2018/119591 A1 offenbart eine Abgasheizeinheit nach dem Oberbegriff des Anspruchs 1, bei welcher ein Mantelheizleiterelement in spiralartiger Form gewunden ist. Zwischen den Windungsabschnitten des Mantelheizleiterelements ist eine mit mäanderartiger Struktur ausgebildete Wärmeübertragungsflächenformation angeordnet. In Scheitelbereichen der mäanderartigen Struktur sind Einsenkungen ausgebildet, in welche das zwischen seinen Windungsabschnitten die Wärmeübertragungsflächenformation aufnehmende Mantelheizleiterelement eingreifend positioniert ist.

Aus der EP 2 256 312 A1 ist ein Abgasreinigungssystem bekannt, bei welchem stromaufwärts eines Oxidationskatalysators ein elektrischer Heizer angeordnet ist.

Die US 2005/0274107 A1 offenbart eine Abgasanlage für eine Brennkraftmaschine, bei welcher im Bereich der Einspritzung von Kraftstoff stromaufwärts einer Abgasbehandlungseinheit ein Zündelement zum Zünden bzw. Verbrennen des in den Abgasstrom eingespritzten Kraftstoffs angeordnet ist. Ferner kann ein mit katalytisch wirksamem Material überzogener und in helixartiger Struktur angeordneter Heizdraht im Abgasstrom vorgesehen sein.

Es ist die Aufgabe der vorliegenden Erfindung, eine Abgasheizeinheit für eine Abgasanlage einer Brennkraftmaschine vorzusehen, welche eine effiziente Erwärmung von Systembereichen der Abgasanlage insbesondere in einer Startphase einer Brennkraftmaschine ermöglicht.

Erfindungsgemäß wird diese Aufgabe gelöst durch eine Abgasheizeinheit für eine Abgasanlage einer Brennkraftmaschine, umfassend:
- ein Mantelheizleiterelement mit einem Mantel und einem in dem Mantel verlaufenden, von Isoliermaterial umgebenen elektrischen Heizleiter,
- eine an einer Außenseite des Mantels angeordnete und mit diesem in Wärmeübertragungskontakt stehende Wärmeübertragungsflächenformation.

Für einen guten Wärmeübertrag zwischen dem Mantel und der Wärmeübertragungsflächenformation bei gleichwohl stabilem Aufbau wird vorgeschlagen ist die Wärmeübertragungsflächenformation mit dem Mantel reibschlüssig durch Aufpressen oder Aufschrumpfen verbunden.

Der Einsatz eines derartigen hochtemperaturfähigen Mantelheizleiterelements ermöglicht die Bereitstellung sehr hoher Temperaturen im Bereich von 600°C bis 800°C am Mantel des Mantelheizleiterelements und damit auch im Bereich der mit dem Mantel in Wärmeübertragungskontakt stehenden Wärmeübertragungsflächenformation. Diese bereitgestellte Wärmeenergie kann genutzt werden, um Systembereiche der Abgasanlage zu erwärmen, beispielsweise indem diese Wärmeenergie von dem die Abgasheizeinheit umströmenden Abgas zu derartigen Systembereichen transportiert wird.

Für einen guten Wärmeübertrag zwischen dem Mantel und der Wärmeübertragungsflächenformation bei gleichwohl stabilem Aufbau wird vorgeschlagen, dass der Mantel mit Metallmaterial aufgebaut ist, oder/und dass die Wärmeübertragungsflächenformation mit dem Mantel materialschlüssig, vorzugsweise durch Schweißen oder Löten, verbunden ist.

Die Wärmeübertragungsflächenformation kann wenigstens ein das Mantelheizleiterelement schraubenwindungsartig umgebendes, vorzugsweise im Wesentlichen orthogonal zu einer Außenumfangswand des Mantels stehende Wärmeübertragungsflächen bereitstellendes Wärmeübertragungselement umfassen. Aufgrund dieser schraubenwindungsartigen Konfiguration wird bei geringer Bauteileanzahl und somit einfach zu realisierendem Aufbau eine große Oberfläche für die thermische Wechselwirkung mit die Abgaseinheit umströmendem Abgas bereitgestellt.

Für eine gute thermische Wechselwirkung der Abgasheizeinheit wird vorgeschlagen, dass das Mantelheizleiterelement wenigstens bereichsweise sich geradlinig erstreckend ausgebildet ist, oder/und dass das Mantelheizleiterelement wenigstens bereichsweise sich schraubenwindungsartig oder/und spiralartig erstreckend ausgebildet ist, oder/und dass das Mantelheizleiterelement wenigstens bereichsweise sich mäanderartig erstreckend ausgebildet ist.

Bei einer alternativen Ausgestaltung kann die Wärmeübertragungsflächenformation eine Mehrzahl von in Abstand zueinander angeordneten plattenartigen Wärmeübertragungselementen umfassen.

Um dabei den Strömungswiderstand gering zu halten, gleichwohl jedoch eine gute Wärmeübertragungskapazität zu gewährleisten, wird vorgeschlagen, dass die Wärmeübertragungselemente zueinander im Wesentlichen parallel angeordnet sind, oder/und dass zwischen wenigstens zwei, vorzugsweise zwischen allen einander unmittelbar benachbarten Wärmeübertragungselementen ein diese berührendes oder/und mit diesen verbundenes Abstandselement angeordnet ist.

Wenigstens ein, vorzugsweise jedes Abstandselement kann die an beiden Seiten desselben angeordneten Wärmeübertragungselemente an deren einander gegenüberliegenden Oberflächenbereichen im Wesentlichen vollständig überdecken. Für eine stabile, gleichwohl eine gute Wärmeübertragung gewährleistende Verbindung wird vorgeschlagen, dass wenigstens ein, vorzugsweise jedes Abstandselement mit wellenartiger Struktur ausgebildet ist und mit Wellenscheitelbereichen an den an beiden Seiten desselben angeordneten Wärmeübertragungselementen anliegt oder/und mit diesen verbunden ist. Wenn wenigstens ein, vorzugsweise jedes Abstandselement für Abgas durchlässig ist, wird eine gute Umströmung aller Oberflächenbereiche mit Abgas gewährleistet. Beispielsweise kann für ein derartiges Abstandselement vorgesehen sein, dass dieses als Drahtgeflecht, als Lochblech oder als Streckmetall ausgebildet ist.

Zur Ankopplung des Mantelheizleiterelements an die plattenartigen Wärmeübertragungselemente wird vorgeschlagen, dass in wenigstens einem, vorzugsweise jedem Wärmeübertragungselement wenigstens eine, vorzugsweise eine Mehrzahl von wenigstens ein Mantelheizleiterelement aufnehmenden Mantelheizleiterelement-Aufnahmeaussparungen vorgesehen ist.

Um dabei einen effizienten Wärmeübertrag von dem Mantelheizleiterelement auf die plattenartigen Wärmeübertragungselemente zu gewährleisten, kann ferner vorgesehen sein, dass bei wenigstens einem, vorzugsweise jedem Wärmeübertragungselement wenigstens eine, vorzugsweise jede Mantelheizleiterelement-Aufnahmeaussparung zu einem Wärmeübertragungselement-Umfangsrandbereich offen ist, oder/und dass bei wenigstens einem, vorzugsweise jedem Wärmeübertragungselement an einander gegenüberliegenden oder bezüglich einander angewinkelt verlaufenden Wärmeübertragungselement-Umfangsrandbereichen jeweils wenigstens eine, vorzugsweise eine Mehrzahl von Mantelheizleiterelement-Aufnahmeaussparungen vorgesehen ist, oder/und dass wenigstens ein Wärmeübertragungselementenpaar, vorzugsweise eine Mehrzahl von Wärmeübertragungselementenpaaren, vorgesehen ist, wobei das Mantelheizleiterelement in wenigstens eine Mantelheizleiterelement-Aufnahmeaussparung jedes Wärmeübertragungselements des wenigstens einen Wärmeübertragungselementenpaares eingreifend positioniert ist.

Bei einer besonders vorteilhaften Weiterbildung der erfindungsgemäßen Abgasheizeinheit kann eine Wärmeübertragungsfläche der Wärmeübertragungsflächenformation wenigstens bereichsweise mit katalytisch wirksamem Material bereitgestellt sein. Somit wird die Abgasheizeinheit nicht nur zur Erwärmung genutzt, sondern auch, um die darin bereitgestellte Wärme direkt zur Durchführung einer katalytischen Reaktion zu nutzen.

Beispielsweise kann wenigstens ein, vorzugsweise jedes Wärmeübertragungselement der Wärmeübertragungsflächenformation mit katalytisch wirksamem Material beschichtet sein.

Für eine stabile Anbindung einer derartigen Beschichtung an ein Wärmeübertragungselement ist es vorteilhaft, wenn das wenigstens eine Wärmeübertragungselement mit Aluminiummaterial, vorzugsweise einer Aluminiumlegierung, wie z.B. FeCrAlloy 1.4767, ausgebildet ist.

Insbesondere dann, wenn die Abgasheizeinheit als Dreiwegekatalysator oder als Diesel-Oxidationskatalysator wirksam sein soll, kann das katalytisch wirksame Material umfassen:
- Platin, oder/und
- Palladium, oder/und
- Rhodium.

Soll die Abgasheizeinheit als SCR-Katalysator wirksam sein, kann das katalytisch wirksame Material umfassen:
- Eisen-Zeolith-Material, oder/und
- Kupfer-Zeolith-Material, oder/und
- Vanadium-Oxid-Material.

Die vorliegende Erfindung betrifft ferner eine Abgasanlage für eine Brennkraftmaschine, umfassend wenigstens ein in einem Abgasströmungskanal angeordnetes, erfindungsgemäß aufgebautes Abgasheizelement.

Um die in der Abgasheizeinheit bereitgestellte und auf das Abgas übertragene Wärme in der Abgasanlage effizient nutzen zu können, ist vorzugsweise das Abgasheizelement in einer Abgasströmungsrichtung im Abgasströmungskanal stromaufwärts bezüglich einer Abgasbehandlungseinheit, insbesondere Katalysatoreinheit oder Partikelfiltereinheit, angeordnet.

Insbesondere dann, wenn die Abgasheizeinheit selbst katalytisch wirksam ausgebildet ist, ist es vorteilhaft, wenn das katalytisch wirksame Material und die Katalysatoreinheit dem gleichen Katalysatortyp zugeordnet sind. Dies bedeutet, dass dann, wenn beispielsweise die Abgasheizeinheit als Dreiwegekatalysator wirksam sein soll und aus diesem Grunde mit entsprechendem katalytisch wirksamem Material beschichtet oder ausgebildet ist, auch die stromab davon angeordnete Katalysatoreinheit vom Typ des Dreiwegekatalysators ist. Somit kann beispielsweise in einer Startphase die durch das Mantelheizleiterelement sehr schnell erwärmte Abgasheizeinheit als Katalysator wirksam sein, auch wenn der stromab dann folgende Dreiwegekatalysator aufgrund zu geringer Temperatur noch nicht katalytisch wirksam ist.

Für eine noch schnellere Erwärmung der Abgasanlage wird vorgeschlagen, dass wenigstens einer Abgasheizeinheit eine Kohlenwasserstoff-Abgabeanordnung zum Abgeben von Kohlenwasserstoff in den Abgasstrom stromaufwärts bezüglich der Abgasheizeinheit zugeordnet ist. Der an der heißen Oberfläche der Abgasheizeinheit reagierende Kohlenwasserstoff, also beispielsweise Benzin oder Diesel, setzt bei seiner Reaktion eine erhebliche Wärmemenge frei, die in der Umgebung der Abgasheizeinheit das dort strömende Abgas erwärmt und somit eine effiziente Erwärmung von weiter stromabwärts liegenden Systembereichen unterstützt.

Die vorliegende Erfindung wird nachfolgend mit Bezug auf die beiliegenden Figuren detailliert beschrieben. Es zeigt:
- Fig. 1: einen Abschnitt einer einen hochtemperaturfähigen Mantelheizer umfassenden Abgasheizeinheit in perspektivischer Ansicht;
- Fig. 2: die Abgaseinheit der Fig. 1 in Seitenansicht;
- Fig. 3: eine prinzipartige Darstellung einer Abgasanlage mit einer Abgasheizeinheit;
- Fig. 4: eine Ansicht einer Abgasheizeinheit in einem Abgaskanal, betrachtet in Abgasströmungsrichtung;
- Fig. 5: eine der Fig. 4 entsprechende Ansicht einer weiteren alternativen Anordnung der Abgasheizeinheit;
- Fig. 6: eine weitere alternative Anordnung der Abgasheizeinheit in perspektivischer Darstellung;
- Fig. 7: eine weitere der Fig. 4 entsprechende Ansicht einer alternativen Anordnung einer Abgasheizeinheit;
- Fig. 8: eine nicht erfindungsgemässe alternative Ausgestaltungsart einer Abgasheizeinheit;
- Fig. 9: einen Abschnitt einer Mehrzahl plattenartiger Wärmeübertragungselemente der Abgasheizeinheit der Fig. 8;
- Fig. 10: eine der Fig. 9 entsprechende Darstellung einander jeweils paarweise gegenüberliegender Wärmeübertragungselemente;
- Fig. 11: ein nicht erfindungsgemäss alternativ ausgestaltetes Wärmeübertragungselement;
- Fig. 12: eine Schichtung von plattenartigen Wärmeübertragungselementen mit dazwischen angeordneten Abstandselementen mit wellenartiger Struktur;
- Fig. 13: die Wärmeübertragungselemente der Fig. 12 in Verbindung mit einem Mantelheizleiterelement;
- Fig. 14: einen Ausschnitt eines mit katalytisch wirksamem Material beschichteten Wärmeübertragungselements;
- Fig. 15: eine Abgasanlage mit einer Abgasheizeinheit stromaufwärts bezüglich einer Katalysatoreinheit;
- Fig. 16: eine Abgasanlage mit einer in einem Abgasrohr stromaufwärts bezüglich einer Katalysatoreinheit angeordneten Abgasheizeinheit;
- Fig. 17: eine Abgasheizeinheit mit dieser zugeordneter Kohlenwasserstoff-Abgabeanordnung.

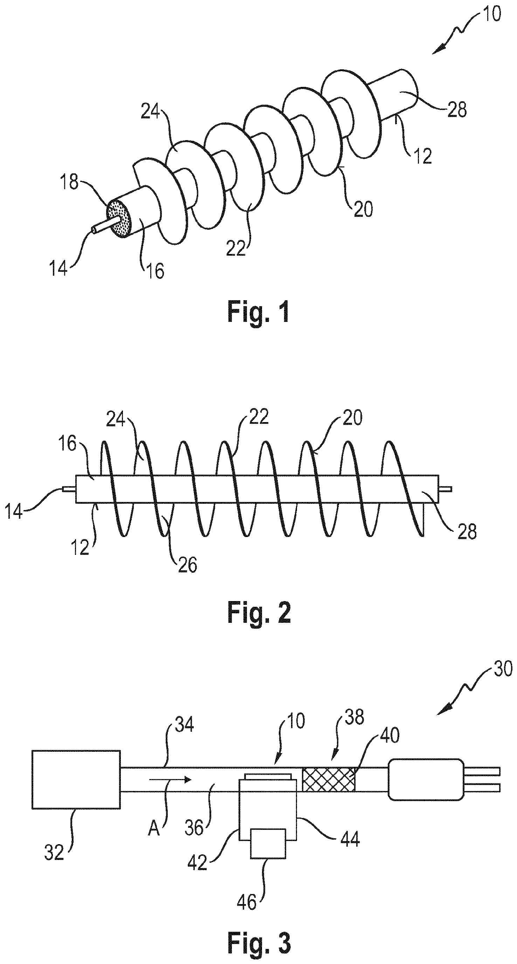

Die Fig. 1 und 2 zeigen eine Abgasheizeinheit 10 für eine Abgasanlage einer Brennkraftmaschine. Die Abgasheizeinheit 10 umfasst ein insbesondere hochtemperaturfähiges Mantelheizleiterelement 12 mit einem in einem Kernbereich desselben angeordneten Heizleiter 14. Der Heizleiter 14 kann einen oder mehrere Heizdrähte umfassen und ist in einem von einem Mantel 16 umgebenen Innenraum durch ein Isoliermaterial 18, beispielsweise Keramikmaterial, umgeben.

An einer Außenoberfläche 28 des mit Metallmaterial, beispielsweise Stahlmaterial, aufgebauten Mantels 16 ist eine Wärmeübertragungsflächenformation 20 angeordnet. Im dargestellten Ausgestaltungsbeispiel umfasst die Wärmeübertragungsflächenformation 20 ein schraubenwindungsartig das Mantelheizleiterelement 12 umgebendes und an dessen Außenoberfläche 28 angebundenes Wärmeübertragungselement 22. An beiden im Wesentlichen in der Längserstreckungsrichtung des Mantelheizleiterelements 12 orientierten Seiten stellt das schraubenwindungsartig ausgebildete Wärmeübertragungselement 22 Wärmeübertragungsflächen 24, 26 bereit, welche von Abgas umströmbar sind und an welchen die vom Mantel 16 aufgenommene Wärme auf das Abgas übertragen werden kann. Selbstverständlich findet auch im Bereich der Außenoberfläche 28 des Mantels 16 ein Wärmeübertrag auf das diesen umströmende Abgas statt.

Das schraubenwindungsartig sich erstreckende Wärmeübertragungselement 22 ist auf den Mantel 16 reibschlüssig durch Aufpressen oder Aufschrumpfen verbunden. Dies kann auch unterstützt und optional dadurch bereitgestellt werden, dass das Wärmeübertragungselement 22 an der Außenoberfläche des Mantels durch Verlöten oder Verschweißen angebunden ist. Mit der schraubenwindungsartig ausgebildeten Struktur des Wärmeübertragungselements 22 wird eine sehr große Gesamtfläche für die Wärmeübertragungsfläche durch ein einziges Bauteil bereitgestellt. Es ist darauf hinzuweisen, dass eine ähnliche Konfiguration auch erreicht werden kann, wenn an der Außenumfangsfläche 28 des Mantels 16 eine Mehrzahl ringscheibenartig ausgebildeter Wärmeübertragungselemente mit beispielsweise im Wesentlichen gleichmäßigem Abstand zueinander angeordnet wird. In diesem Falle ist jedoch eine Mehrzahl einzelner Wärmeübertragungselemente vorzusehen, von welchen jedes einzelne an der Außenoberfläche 28 des Mantels 16 festgelegt werden muss.

Die Fig. 3 zeigt in prinzipartiger Darstellung den Aufbau einer Abgasanlage 30 für eine Brennkraftmaschine 32. Die Abgasanlage 30 umfasst in einem ein- oder mehrteiligen Abgasrohr 34 einen Abgaskanal 36. Im Abgaskanal 36 ist stromaufwärts bezüglich einer Abgasbehandlungseinheit 38, beispielsweise einer Katalysatoreinheit 40, eine Abgasbehandlungseinheit 10 angeordnet, die beispielsweise den vorangehend mit Bezug auf die Fig. 1 und 2 beschriebenen Aufbau aufweisen kann. Im dargestellten Ausgestaltungsbeispiel ist die Abgasbehandlungseinheit 10 bzw. deren Mantelheizleiterelement 12 im Wesentlichen langgestreckt bzw. geradlinig sich in der Abgasströmungsrichtung im Abgaskanal 36 erstreckend stromaufwärts der Abgasbehandlungseinheit angeordnet. An den beiden Längsenden der Abgasbehandlungseinheit 10 ist diese in Kontakt mit elektrischen Leitungen 42, 44, über welche die Abgasbehandlungseinheit 10 an eine Spannungsquelle 46 angeschlossen ist.

Insbesondere in einer Startphase der Brennkraftmaschine 32, in welcher die Abgasanlage 10, insbesondere auch die Katalysatoreinheit 14 kalt ist und damit eine katalytische Reaktion darin nicht ausgelöst werden kann, kann die Abgasbehandlungseinheit 10 durch Anlegen einer elektrischen Spannung erregt werden, so dass das Mantelheizleiterelement 12 und auch die Wärmeübertragungsflächenformation 20 erwärmt werden. Das mit den Wärmeübertragungsflächen 24, 26 bzw. der Außenoberfläche 28 in Kontakt tretende Abgas nimmt Wärme auf und transportiert diese zur Katalysatoreinheit 40, so dass bei noch vergleichsweise geringer Abgastemperatur bzw. unterstützend zu der in den Abgasen bereits transportierten Wärmeenergie eine schnellere Erwärmung der Katalysatoreinheit 40 und damit ein schnelleres Erreichen derjenigen Temperatur, bei welcher die katalytische Reaktion einsetzen kann, gewährleistet ist.

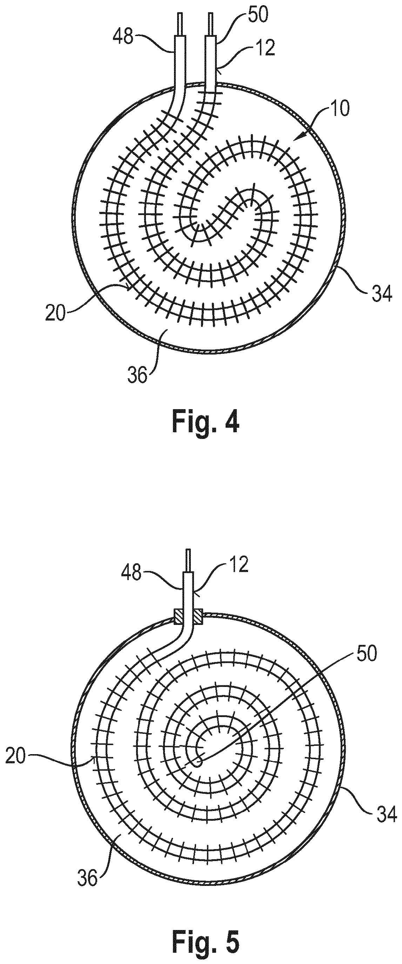

Die Fig. 4 bis 7 zeigen verschiedene räumliche Anordnungen einer derartigen Abgasbehandlungseinheit 10 im Abgaskanal 36. So zeigt beispielsweise die Fig. 4 eine im Wesentlichen in einer zur Abgasströmungsrichtung A orthogonal stehenden Ebene gewundene, insbesondere nach Art einer Doppelspirale gewundene Konfiguration des Mantelheizleiterelements 12 mit der an dessen Außenumfangsfläche 28 vorgesehenen Wärmeübertragungsflächenformation 20. Die beiden zur elektrischen Kontaktierung außerhalb des Abgasrohrs freiliegenden Enden 48, 50 des Mantelheizleiterelements 12 liegen im gleichen Längenbereich des Abgasrohrs 34 und können somit in einfacher Weise elektrisch an die Spannungsquelle 46 angeschlossen werden.

Die Fig. 5 zeigt eine Konfiguration, bei welcher das Mantelheizleiterelement 12 wieder in einer zur Abgasströmungsrichtung A im Wesentlichen orthogonalen Ebene in einer Einfachspirale gewunden ist. Der im Mantelheizleiterelement 12 angeordnete Heizleiter 14 weist in diesem Ausgestaltungsfall zwei Heizdrähte auf, die nebeneinander verlaufen und an dem im zentralen Bereich positionierten Ende 50 des Mantelheizleiterelements 12 ineinander übergehen, so dass an dem außerhalb des Abgasrohrs 34 liegenden Ende 48 des Mantelheizleiterelements 12 beide Heizdrähte kontaktiert werden können.

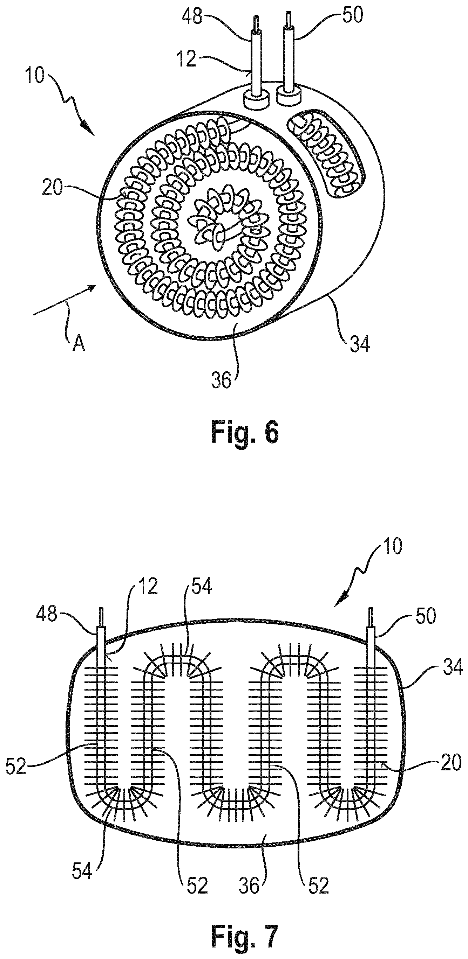

Fig. 6 zeigt eine Konfiguration, bei welcher das Mantelheizleiterelement 12 mit zwei spiralartigen Windungskonfigurationen aufeinanderfolgend angeordnet ist. Somit können die beiden elektrisch zu kontaktierenden Enden 48, 50 beispielsweise mit einem Abstand in der Abgasströmungsrichtung A durch das Abgasrohr 34 hindurchgeführt werden, welcher näherungsweise auch dem Abstand der beiden jeweils im Wesentlichen in einer Ebene liegenden, spiralartigen Windungsbereiche entspricht.

Die Fig. 7 zeigt eine Konfiguration, bei welcher die Abgasheizeinheit 10 in einem Abgasrohr 34 oder einem abgasführenden Gehäuse mit abgeflachtem, näherungsweise rechteckigem Querschnitt angeordnet ist. Das Mantelheizleiterelement 12 ist dabei mäanderartig gewunden angeordnet und weist näherungsweise parallel zueinander verlaufende, jeweils im Wesentlichen geradlinig sich erstreckende Mäanderabschnitte 52 auf, die durch jeweilige Krümmungsbereiche 54 des Mantelheizleiterelements 12 verbunden sind. Auf diese Art und Weise lässt sich die Gestalt der Abgasheizeinheit 10 leicht an die Umfangskontur des diese aufnehmenden Abgasrohrs 34 oder Gehäuses anpassen, wozu auch beiträgt, dass die Wärmeübertragungsflächenformation 20 entweder schraubenwindungsartig oder mit einer Mehrzahl von Ringscheiben ausgebildet an der Außenoberfläche 28 des Mantelheizleiterelements 12 angeordnet ist und sich somit leicht an die gekrümmte oder gebogene Konfiguration des Mantelheizleiterelements 12 anpassen lässt.

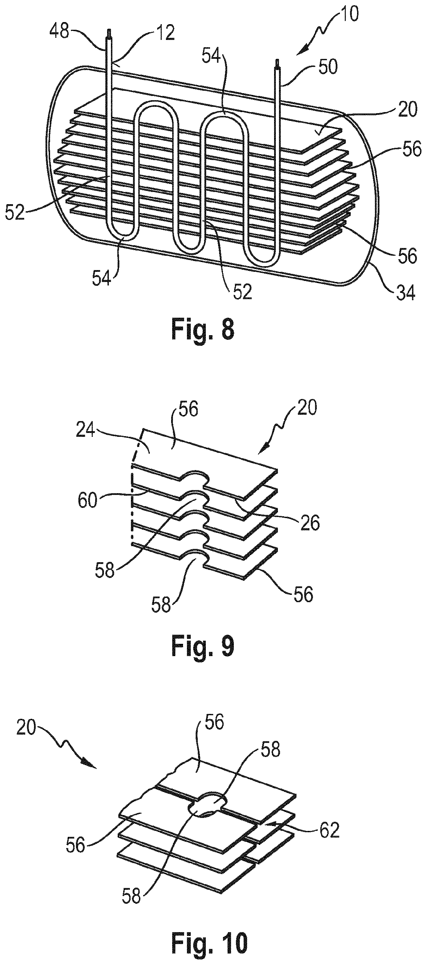

Die Fig. 8 zeigt eine nicht erfindungsgemässe alternative Ausgestaltung einer Abgasheizeinheit 10, bei welcher das Mantelheizleiterelement 12 in Kontakt mit einer Mehrzahl von im Wesentlichen parallel zueinander angeordneten, plattenartigen Wärmeübertragungselementen 56 der Wärmeübertragungsflächenformation 20 ist. Wie in Fig. 8 angedeutet, kann auch eine derartige Ausgestaltung leicht an verschiedenste Umfangskonturen des die Abgasheizeinheit 10 aufnehmenden Abgasrohrs 34 oder Gehäuses angepasst werden.

Für einen effizienten Wärmeübertrag zwischen dem Mantelheizleiterelement 12 und den Wärmeübertragungselementen 56 ist das Mantelheizleiterelement 12 mäanderartig gewunden ausgebildet und weist die bereits mit Bezug auf die Fig. 7 beschriebenen Mäanderabschnitte 52 und diese verbindenden Krümmungsbereiche 54 auf. In Zuordnung insbesondere zu den Mäanderabschnitten 52 sind, wie in Fig. 9 veranschaulicht, in den plattenartigen Wärmeübertragungselementen 56 Mantelheizleiterelement-Aufnahmeaussparungen 58 ausgebildet. Diese sind zu einem Wärmeübertragungselement-Umfangsrandbereich 60 offen und weisen, angepasst an eine beispielsweise kreisrunde Außenumfangskontur des Mantels 16 eine halbkreisartige Konfiguration auf. Das Mantelheizleiterelement 12 kann in diese Mantelheizleiterelement-Aufnahmeaussparungen 58 beispielsweise unter Presspassung eingepasst werden und kann mit den einzelnen Wärmeübertragungselementen 56 materialschlüssig, beispielsweise durch Verlöten oder Verschweißen, verbunden werden.

Zur Erhöhung der Stabilität der so aufgebauten Abgasheizeinheit 10 können die plattenartigen Wärmeübertragungselemente 56 durch in den Figuren nicht dargestellte Halter miteinander und auch dem diese aufnehmenden Abgasrohr 34 bzw. einem diese aufnehmenden Gehäuse verbunden sein.

Die Fig. 10 zeigt eine Konfiguration, bei welcher jeweils zwei derartige plattenartige Heizelemente 56 einander gegenüberliegend angeordnet sind und somit ein Wärmeübertragungselementenpaar 62 bereitstellen. Dabei liegen die in den Wärmeübertragungselementen 56 eines Wärmeübertragungselementenpaares 62 gebildete Mantelheizleiterelement-Aufnahmeaussparungen 58 einander gegenüber, so dass die beiden Wärmeübertragungselemente 56 eines jeweiligen Wärmeübertragungselementenpaares 62 den Mantel 16 des Mantelheizleiterelements 12 näherungsweise im gleichen Längenbereich zusammen im Wesentlichen vollständig umgreifen.

Durch die paarweise Zuordnung der Wärmeübertragungselemente 56 zueinander wird die gesamte zur Wärmeübertragung verfügbare Fläche vergrößert. Da die Wärmeübertragungselemente 56 eines jeweiligen Wärmeübertragungselementenpaares 62 zueinander in der Längserstreckungsrichtung des Mantelheizleiterelements 12 im Wesentlichen nicht versetzt sind, wird der Strömungswiderstand für das ein derart aufgebautes Abgasheizelement 10 umströmende Abgas gering gehalten. Es ist darauf hinzuweisen, dass insbesondere dann, wenn im Abgasstrom eine stärkere Verwirbelung erzeugt werden soll, die Wärmeübertragungselemente 56 eines jeweiligen Wärmeübertragungselementenpaares 62 zueinander in der Längserstreckungsrichtung des an diesen vorbeigeführten Heizleiterelements 12 auch versetzt angeordnet sein können.

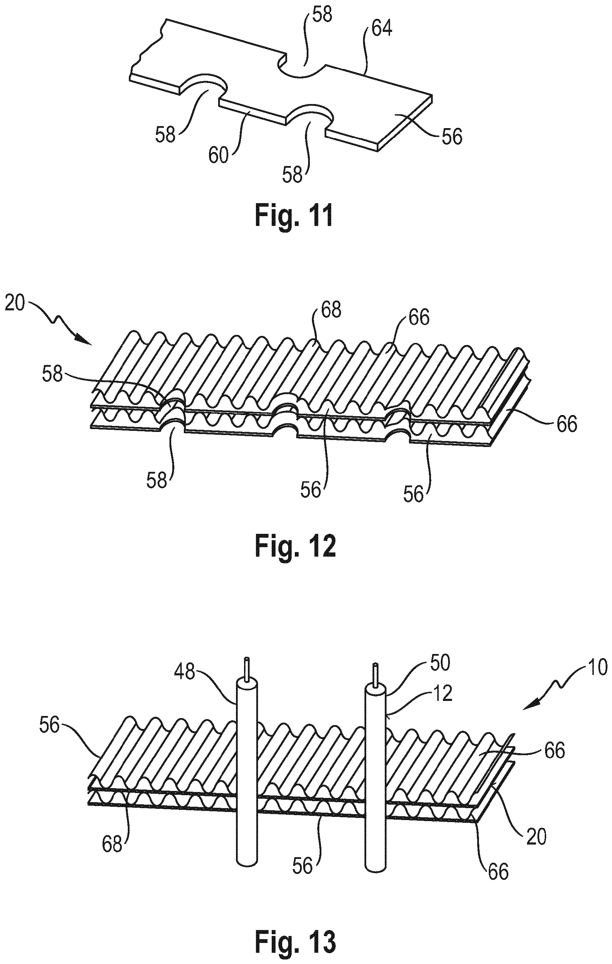

Die Fig. 11 zeigt ein Wärmeübertragungselement 56, bei welchem in einander gegenüberliegenden Wärmeübertragungselement-Umfangsrandbereichen 60, 64 jeweilige Mantelheizleiterelement-Aufnahmeaussparungen 58 ausgebildet sind. Somit wird es möglich, an beiden Seiten, beispielsweise einer stromaufwärts orientierten und einer stromabwärts orientierten Seite der Wärmeübertragungselemente 56 jeweils zumindest ein Mantelheizleiterelement 12 anzuordnen und mit diesem fest zu verbinden.

Die Fig. 12 zeigt eine Konfiguration, bei welcher zwischen den im Wesentlichen parallel zueinander angeordneten Wärmeübertragungselementen 56 jeweils ein mit wellenartiger Struktur ausgebildetes Abstandselement 66 angeordnet ist. Somit wird eine stabile Gesamtstruktur erhalten, bei welcher die Abstandselemente 66 an Wellenscheitelbereichen 68 mit den benachbart dazu angeordneten Wärmeübertragungselementen 56 beispielsweise durch Verlötung oder Verschweißung oder Verklebung verbunden sein können. Diese vorzugsweise auch aus Metallmaterial aufgebauten Abstandselemente 66 erhöhen die gesamt zur Wärmeübertragung bereitgestellte Oberfläche und überdecken die beidseits davon angeordneten Wärmeübertragungselemente 56 jeweils im Wesentlichen vollständig. Dort, wo in den Wärmeübertragungselementen Mantelheizleiterelement-Aufnahmeaussparungen 58 vorgesehen sind, kann zum Bereitstellen eines einfach zu realisierenden Aufbaus ein jeweiliges Abstandselement 66 vom entsprechenden Umfangsrandbereich der benachbarten Wärmeübertragungselemente 56 zurückversetzt sein.

Um das Entstehen von Strömungsschattenbereichen bzw. schwer anzuströmenden Bereichen zu vermeiden, können die Abstandselemente 66 derart ausgebildet sein, dass sie vom Abgas durchströmt werden können. Beispielsweise können diese aus Drahtgeflecht oder einem Lochblech oder Streckmetall bereitgestellt sein und somit eine Vielzahl von Öffnungen aufweisen, welche den Hindurchtritt von Abgas ermöglichen.

Auch eine derartige verbundene Struktur der Wärmeübertragungsflächenelemente 56 kann an einem Abgasrohr oder einem diese tragenden Gehäuse durch ein nicht dargestelltes Halteelement abgestützt werden, so dass auch im Fahrbetrieb auftretende Erschütterungen nicht dazu führen können, dass eine Lageänderung einer so aufgebauten Abgasheizeinheit in einem Abgasrohr oder einem Gehäuse auftritt.

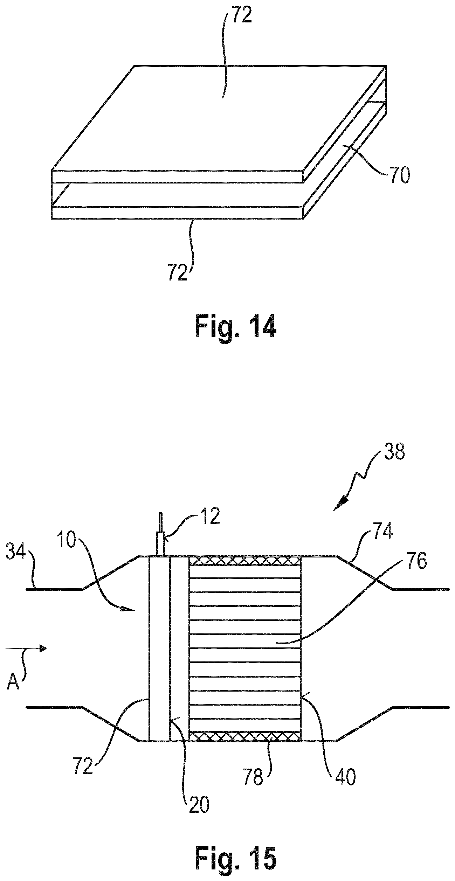

Die Fig. 14 zeigt einen Ausschnitt eines beispielsweise plattenartig ausgebildeten Wärmeübertragungselements 70, das an seiner von Abgas umströmbaren Außenoberfläche wenigstens bereichsweise mit katalytisch wirksamem Material 72 beschichtet ist. Für eine stabile Anbindung von derartigem katalytisch wirksamem Material ist es vorteilhaft, ein derartiges Wärmeübertragungselement 70 aus Aluminium oder einer Aluminiumlegierung mit hohem Aluminiumanteil bereitzustellen. Üblicherweise wird beim Aufbringen von derartigem katalytisch wirksamem Material 72 zunächst die metallische Oberfläche mit einer als Washcoat bezeichneten porösen, oxidkeramischen Beschichtung mit einer großen inneren Oberfläche überzogen. Auf diese Beschichtung wird dann das katalytisch wirksame Material beispielsweise in einem so genannten Imprägnierungsprozess aufgebracht.

Durch das Aufbringen von katalytisch wirksamem Material 72 auf ein bzw. mehrere Wärmeübertragungselemente 70 wird die Möglichkeit geschaffen, bei Erregung eines oder mehrerer damit verbundener Mantelheizleiterelemente die Wärmeübertragungselemente 70 bzw. die katalytisch wirksame Beschichtung 72 sehr schnell auf eine Temperatur zu bringen, bei welcher beim Umströmen mit Abgas die katalytische Reaktion erfolgen kann. Dies ermöglicht es, auch in der Startphase einer Brennkraftmaschine nahezu ohne zeitliche Verzögerung eine katalytische Wirkung in der Abgasanlage bereitzustellen und somit auch unmittelbar nach dem Anlassen einer Brennkraftmaschine den Schadstoffausstoß deutlich zu senken.

Eine derartige Beschichtung mit katalytisch wirksamem Material kann unabhängig von der Ausgestaltung der Wärmeübertragungsflächenformation bereitgestellt werden. Insbesondere kann bei jeder der in den Figuren 1-13 dargestellten Konfigurationen eines oder mehrere der Wärmeübertragungselemente an zumindest einer Seite, vorzugsweise aber vollständig mit katalytisch wirksamem Material überzogen sein.

Abhängig davon, von welchem Typ die so bereitgestellte Katalysatorwirkung sein soll, wird das katalytisch wirksame Material 72 ausgewählt. Soll beispielsweise die Abgasheizeinheit 10 als Dreiwegekatalysator wirksam sein, kann das katalytisch wirksame Material Platin, Palladium, Rhodium oder Mischungen davon enthalten. Auch die Temperaturbeständigkeit des katalytisch wirksamen Materials 72 verbessernde Strukturpromotoren können in dieser Beschichtung vorgesehen sein. Soll die Wirkung eines Diesel-Oxidationskatalysators erreicht werden, ist es vorteilhaft, als Hauptkomponenten des katalytisch wirksamen Materials 72 Platin und Palladium einzusetzen. Auch Mischoxide können zur Anwendung kommen. Soll die Wirkung eines SCR-Katalysators erreicht werden, ist es vorteilhaft, das katalytisch wirksame Material mit Eisen-Zeolith-Material, Kupfer-Zeolith-Material oder Vanadium-Oxid-Material, wie z. B. Vanadium-Pentoxid, bereitzustellen.

Dieser Katalysatoreffekt kann dann in besonders effizienter Weise genutzt werden, wenn, wie die Fig. 15 dies veranschaulicht, eine derartige mit katalytisch wirksamem Material bereitgestellte Abgasheizeinheit 10 beispielsweise in einem Katalysatorgehäuse 74 stromaufwärts bezüglich der darin angeordneten Katalysatoreinheit 40 angeordnet ist. Es sei darauf hingewiesen, dass in üblicher Bauart die Katalysatoreinheit 40 einen beispielsweise mit katalytisch wirksamem Material aufgebauten oder überzogenen Monolithen 76 aufweisen kann, der durch eine diese umgebenden Fasermatte 78 im Katalysatorgehäuse 74 gehalten sein kann.

Bei derartigem Aufbau ist vorzugsweise vorgesehen, dass das an der Abgasheizeinheit 10 vorgesehene katalytisch wirksame Material 72 und die Katalysatoreinheit 40 den gleichen Typ einer katalytischen Reaktion bereitstellen. Somit kann in einer Startphase, also unmittelbar nach dem Anlassen der beispielsweise in Fig. 3 veranschaulichten Brennkraftmaschine 32, durch elektrische Erregung sehr schnell die Abgasheizeinheit 10 mit dem daran vorgesehenen katalytisch wirksamen Material 72 auf die zur Durchführung der katalytischen Reaktion erforderliche Temperatur gebracht werden und somit als Katalysator wirksam werden, noch bevor die Katalysatoreinheit 40 die dazu erforderliche Temperatur erreicht hat. Die Katalysatoreinheit 40 wird einerseits durch das auch in der Startphase von der Brennkraftmaschine 32 ausgestoßene Abgas, andererseits durch das die Abgasheizeinheit 10 umströmende Abgas erwärmt und somit ebenfalls schnell auf eine ausreichend hohe Temperatur gebracht, um auch in dieser die katalytische Reaktion durchzuführen. Ist diese Temperatur erreicht, kann die Erregung des Mantelheizleiterelements 12 der Abgaseinheit 10 beendet werden.

Dies kann entweder durch Bereitstellung eines Temperatursignals erkannt werden, oder es kann ein definierter Zeitraum bereitgestellt sein, über welchen hinweg in der Startphase der Brennkraftmaschine 32 die Abgasheizeinheit 10 erregt wird.

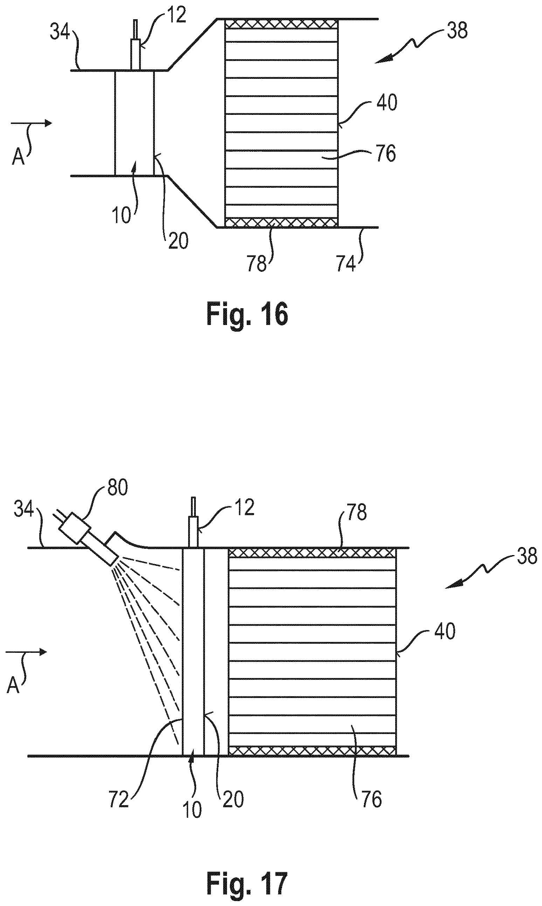

Die Fig. 16 zeigt eine Ausgestaltung, bei welcher die Abgasheizeinheit 10 stromaufwärts bezüglich der Katalysatoreinheit 40 nicht im Katalysatorgehäuse 74, sondern in dem an dessen stromaufwärtiges Ende anschließenden Abgasrohr 34 untergebracht ist. Eine derartige Anordnung kann beispielsweise dann von Vorteil sein, wenn die Abgasheizeinheit 10 die in den Fig. 1 und 2 dargestellte langgestreckte Konfiguration aufweisen soll.

Die Fig. 17 zeigt eine Abgasanlage 30, bei welcher in Zuordnung zu der beispielsweise gleichermaßen mit katalytisch wirksamem Material 72 bereitgestellten Abgasheizeinheit 10 eine Kohlenwasserstoff-Abgabeanordnung 80 vorgesehen ist. Diese kann nach Art eines Injektors Kohlenwasserstoff, also beispielsweise den auch für den Betrieb der Brennkraftmaschine 32 eingesetzten Brennstoff, in Richtung auf die Abgaseinheit 10 zu in den Abgasstrom einspritzen. Der Kohlenwasserstoff reagiert an der heißen Oberfläche der Abgasheizeinheit 10, so dass die Umsetzung des Kohlenwasserstoffs Reaktionswärme freisetzt, die zusätzlich auf das in Richtung der stromabwärts dann folgenden Katalysatoreinheit 40 strömende Abgas übertragen werden kann. Eine derartige Ausgestaltung ist insbesondere dann von Vorteil, wenn die Katalysatoreinheit 40 als SCR-Katalysator ausgebildet ist, an welcher unter Umsetzung des durch eine nicht dargestellte Reduktionsmittel-Abgabeanordnung eingespritzten Reduktionsmittels, also beispielsweise einer Harnstoff/WasserLösung, eine selektive katalytische Reduktion durchgeführt wird. Auch kann ein als Abgasbehandlungseinheit 38 eingesetzter Partikelfilter unabhängig vom Betrieb der Brennkraftmaschine 12 durch die Einspritzung von Kohlenwasserstoff regeneriert werden.

Bei einer weiteren Ausgestaltungsart kann im Abgasstrom transportierter Kohlenwasserstoff auch dadurch bereitgestellt werden, dass dieser gezielt von der Brennkraftmaschine 32 ausgestoßen wird. Hierzu kann beispielsweise durch entsprechende Einstellung des Zündwinkels bzw. durch späte Kraftstoffeinspritzung dafür gesorgt werden, dass bei der in der Brennkraftmaschine 32 stattfindenden Verbrennung nur ein Teil des Brennstoffs zündet, während ein Teil des Brennstoffs unverbrannt ausgestoßen wird und zur Umsetzung an der Abgasheizeinheit 10 oder/und der Abgasbehandlungseinheit 38 zur Verfügung steht.

## Patentansprüche

1. Abgasheizeinheit für eine Abgasanlage einer Brennkraftmaschine, umfassend:
- ein Mantelheizleiterelement (12) mit einem Mantel (16) und einem in dem Mantel (16) verlaufenden, von Isoliermaterial (18) umgebenen elektrischen Heizleiter (14),
- eine an einer Außenseite des Mantels (16) angeordnete und mit diesem in Wärmeübertragungskontakt stehende Wärmeübertragungsflächenformation (20),
**dadurch gekennzeichnet, dass** die Wärmeübertragungsflächenformation (20) mit dem Mantel (16) reibschlüssig durch Aufpressen oder Aufschrumpfen verbunden ist.

2. Abgasheizeinheit nach Anspruch 1, **dadurch gekennzeichnet, dass** der Mantel (16) mit Metallmaterial aufgebaut ist, oder/und dass die Wärmeübertragungsflächenformation (20) mit dem Mantel (16) zusätzlich materialschlüssig, vorzugsweise durch Schweißen oder Löten, verbunden ist.

3. Abgasheizeinheit nach Anspruch 1 oder 2, **dadurch gekennzeichnet, dass** die Wärmeübertragungsflächenformation (20) wenigstens ein das Mantelheizleiterelement (12) schraubenwindungsartig umgebendes, vorzugsweise orthogonal zu einer Außenumfangswand des Mantels stehende Wärmeübertragungsflächen (24, 26) bereitstellendes Wärmeübertragungselement (22) umfasst,
vorzugsweise
wobei das Mantelheizleiterelement (12) wenigstens bereichsweise sich geradlinig erstreckend ausgebildet ist oder/und das Mantelheizleiterelement (12) wenigstens bereichsweise sich schraubenwindungsartig oder/und spiralartig erstreckend ausgebildet ist oder/und das Mantelheizleiterelement (12) wenigstens bereichsweise sich mäanderartig erstreckend ausgebildet ist.

4. Abgasheizeinheit nach Anspruch 1 oder 2, **dadurch gekennzeichnet, dass** die Wärmeübertragungsflächenformation (20) eine Mehrzahl von in Abstand zueinander angeordneten plattenartigen Wärmeübertragungselementen (56) umfasst.

5. Abgasheizeinheit nach Anspruch 4, **dadurch gekennzeichnet, dass** die Wärmeübertragungselemente (56) zueinander im Wesentlichen parallel angeordnet sind, oder/und dass zwischen wenigstens zwei, vorzugsweise zwischen allen einander unmittelbar benachbarten Wärmeübertragungselementen (56) ein diese berührendes oder/und mit diesen verbundenes Abstandselement (66) angeordnet ist,
vorzugsweise
wobei wenigstens ein, vorzugsweise jedes Abstandselement (66) die an beiden Seiten desselben angeordneten Wärmeübertragungselemente (56) in deren einander gegenüberliegenden Oberflächenbereichen im Wesentlichen vollständig überdeckt, wenigstens ein, vorzugsweise jedes Abstandselement (66) mit wellenartiger Struktur ausgebildet ist und mit Wellenscheitelbereichen (68) an den an beiden Seiten desselben angeordneten Wärmeübertragungselementen (56) anliegt oder/und mit diesen verbunden ist, oder/und wenigstens ein, vorzugsweise jedes Abstandselement (66) für Abgas durchlässig ist.

6. Abgasheizeinheit nach einem der Ansprüche 4 oder 5, **dadurch gekennzeichnet, dass** in wenigstens einem, vorzugsweise jedem Wärmeübertragungselement (56) wenigstens eine, vorzugsweise eine Mehrzahl von wenigstens ein Mantelheizleiterelement (12) aufnehmenden Mantelheizleiterelement-Aufnahmeaussparungen (58) vorgesehen ist.

7. Abgasheizeinheit nach Anspruch 6, **dadurch gekennzeichnet, dass** bei wenigstens einem, vorzugsweise jedem Wärmeübertragungselement (56) wenigstens eine, vorzugsweise jede Mantelheizleiterelement-Aufnahmeaussparung (58) zu einem Wärmeübertragungselement-Umfangsrandbereich (60, 64) offen ist, oder/und dass bei wenigstens einem, vorzugsweise jedem Wärmeübertragungselement (56) an einander gegenüberliegenden oder bezüglich einander angewinkelt verlaufenden Wärmeübertragungselement-Umfangsrandbereichen (60, 64) jeweils wenigstens eine, vorzugsweise eine Mehrzahl von Mantelheizleiterelement-Aufnahmeaussparungen (58) vorgesehen ist, oder/und dass wenigstens ein Wärmeübertragungselementenpaar (62), vorzugsweise eine Mehrzahl von Wärmeübertragungselementenpaaren (62), vorgesehen ist, wobei das Mantelheizleiterelement (12) in wenigstens eine Mantelheizleiterelement-Aufnahmeaussparung (58) jedes Wärmeübertragungselements (56) des wenigstens einen Wärmeübertragungselementenpaares (62) eingreifend positioniert ist.

8. Abgasheizeinheit nach einem der vorangehenden Ansprüche, **dadurch gekennzeichnet, dass** eine Wärmeübertragungsfläche der Wärmeübertragungsflächenformation (20) wenigstens bereichsweise mit katalytisch wirksamem Material (72) bereitgestellt ist.

9. Abgasheizeinheit nach Anspruch 8, **dadurch gekennzeichnet, dass** wenigstens ein, vorzugsweise jedes Wärmeübertragungselement (70) der Wärmeübertragungsflächenformation mit katalytisch wirksamem Material (72) beschichtet ist,
vorzugsweise
wobei das wenigstens eine Wärmeübertragungselement (70) mit Aluminiummaterial, vorzugsweise einer Aluminiumlegierung, ausgebildet ist.

10. Abgasheizeinheit nach einem der Ansprüche 8 oder 9, **dadurch gekennzeichnet, dass** das katalytisch wirksame Material (72) umfasst:
- Platin, oder/und
- Palladium, oder/und
- Rhodium.

11. Abgasheizeinheit nach einem der Ansprüche 8-10, **dadurch gekennzeichnet, dass** das katalytisch wirksame Material (72) umfasst:
- Eisen-Zeolith-Material, oder/und
- Kupfer-Zeolith-Material, oder/und
- Vanadium-Oxid-Material.

12. Abgasanlage für eine Brennkraftmaschine, umfassend wenigstens eine in einem Abgasströmungskanal (36) angeordnete Abgasheizeinheit (10) nach einem der vorangehenden Ansprüche.

13. Abgasanlage nach Anspruch 12, **dadurch gekennzeichnet, dass** die Abgasheizeinheit (10) in einer Abgasströmungsrichtung (A) im Abgasströmungskanal (36) stromaufwärts bezüglich einer Abgasbehandlungseinheit (38), vorzugsweise Katalysatoreinheit (40) oder Partikelfiltereinheit, angeordnet ist.

14. Abgasanlage nach Anspruch 13, sofern auf einen der Ansprüche 8-11 rückbezogen, **dadurch gekennzeichnet, dass** das katalytisch wirksame Material (72) und die Katalysatoreinheit (40) dem gleichen Katalysatortyp zugeordnet sind.

15. Abgasanlage nach einem der Ansprüche 12-14, **dadurch gekennzeichnet, dass** wenigstens einer Abgasheizeinheit (10) eine Kohlenwasserstoff-Abgabeanordnung (80) zum Abgeben von Kohlenwasserstoff in den Abgasstrom stromaufwärts bezüglich des Abgasheizelements (10) zugeordnet ist.

## Claims

1. Exhaust gas heating unit for an exhaust system of an internal combustion engine, comprising:
- a jacket heating conductor element (12) with a jacket (16) and with an electrical heating conductor (14) which extends in the jacket (16) and is surrounded by insulating material (18),
- a heat transfer surface formation (20) which is arranged on an outer side of the jacket (16) and is in heat transfer contact with the same,
**characterized in that** the heat transfer surface formation (20) is connected to the jacket (16) in a frictionally engaged manner by pressing on or shrinking on.

2. Exhaust gas heating unit in accordance with claim 1, **characterized in that** the jacket (16) is made of a metallic material, or/and that the heat transfer surface formation (20) is additionally connected to the jacket (16) by connection in substance, preferably by welding or soldering.

3. Exhaust gas heating unit in accordance with claim 1 or 2, **characterized in that** the heat transfer surface formation (20) comprises at least one heat transfer element (22), which surrounds the jacket heating conductor element (12) in a helical manner and preferably provides heat transfer surfaces (24, 26) which are at right angles to an outer circumferential wall of the jacket,
preferably
wherein the jacket heating conductor element (12) is configured extending linearly in at least some areas, or/and the jacket heating conductor element (12) is configured extending in a helical manner or/and in a spiral-like manner in at least some areas, or/and the jacket heating conductor element (12) is configured extending in a meandering manner in at least some areas.

4. Exhaust gas heating unit in accordance with claim 1 or 2, **characterized in that** the heat transfer surface formation (20) comprises a plurality of plate-like heat transfer elements (56), which are arranged at a distance from one another.

5. Exhaust gas heating unit in accordance with claim 4, **characterized in that** the heat transfer elements (56) are arranged essentially parallel to one another, or/and that a spacing element (66), which is in contact with the heat transfer elements (56) or/and is connected to the same, is arranged between at least two heat transfer elements (56), preferably between all heat transfer elements (56) directly adjacent to one another,
preferably
wherein at least one spacing element (66), preferably each spacing element (66) essentially fully covers the heat transfer elements (56) arranged on both sides of the same in the surface areas thereof, located opposite one another, at least one spacing element (66), preferably each spacing element (66) is configured with a wave-like structure and is in contact with the heat transfer elements (56) arranged on both sides of the same with wave crest areas (68), or/and is connected to the same, or/and at least one spacing element (66), preferably each spacing element (66) is permeable to exhaust gas.

6. Exhaust gas heating unit in accordance with one of the claims 4 or 5, **characterized in that** at least one jacket heating conductor element receiving recess (58), preferably a plurality of jacket heating conductor element receiving recesses (58) receiving at least one jacket heating conductor element (12) is/are provided in at least one heat transfer element (56), preferably in each heat transfer element (56).

7. Exhaust gas heating unit in accordance with claim 6, **characterized in that** at least one jacket heating conductor element receiving recess (58), preferably each jacket heating conductor element receiving recess (58) is open toward a heat transfer element circumferential edge area (60, 64) in case of at least one heat transfer element, preferably in case of each heat transfer element (56), or/and that at least one jacket heating conductor element receiving recess (58), preferably a plurality of jacket heating conductor element receiving recesses (58) is/are each provided at heat transfer element circumferential edge areas (60, 64), which are located opposite one another or extend bent at an angle in relation to one another, in case of at least one heat transfer element (56), preferably in case of each heat transfer element (56), or/and that at least one pair of heat transfer elements (62), preferably a plurality of pairs of heat transfer elements (62) is/are provided, wherein the jacket heating conductor element (12) is positioned in a manner meshing with at least one jacket heating conductor element receiving recess (58) of each heat transfer element (56) of the at least one pair of heat transfer elements (62).

8. Exhaust gas heating unit in accordance with one of the preceding claims, **characterized in that** a heat transfer surface of the heat transfer surface formation (20) is formed with catalytically active material (72) in at least some areas.

9. Exhaust gas heating unit in accordance with claim 8, **characterized in that** at least one heat transfer element (70), preferably each heat transfer element (70) of the heat transfer surface formation is coated with catalytically active material (72),
preferably
wherein the at least one heat transfer element (70) is made of aluminum material, preferably an aluminum alloy.

10. Exhaust gas heating unit in accordance with one of the claims 8 or 9, **characterized in that** the catalytically active material (72) comprises:
- platinum, or/and
- palladium, or/and
- rhodium.

11. Exhaust gas heating unit in accordance with one of the claims 8-10, **characterized in that** the catalytically active material (72) comprises:
- iron zeolite material, or/and
- copper zeolite material, or/and
- vanadium oxide material.

12. Exhaust system for an internal combustion engine, comprising at least one exhaust gas heating unit (10) in accordance with one of the preceding claims, which is arranged in an exhaust gas flow duct (36).

13. Exhaust system in accordance with claim 12, **characterized in that** the exhaust gas heating unit (10) is arranged in an exhaust gas flow direction (A) in the exhaust gas flow duct (36) upstream in relation to an exhaust gas treatment unit (38), preferably a catalytic converter unit (40) or a particle filter unit.

14. Exhaust system in accordance with claim 13, if referred back to one of the claims 8-11, **characterized in that** the catalytically active material (72) and the catalytic converter unit (40) are associated with the same type of catalytic converter.

15. Exhaust system in accordance with one of the claims 12-14, **characterized in that** a hydrocarbon release device (80) is associated with at least one exhaust gas heating unit (10) for releasing hydrocarbon into the exhaust gas stream upstream in relation to the exhaust gas heating element (10).

## Revendications

1. Unité de chauffage de gaz d'échappement pour un système d'échappement d'un moteur à combustion interne, comprenant :
- un élément conducteur chauffant à gaine (12) avec une gaine (16) et avec un conducteur chauffant électrique (14) qui s'étend dans la gaine (16) et est entouré d'un matériau isolant (18),
- une formation de surface de transfert de chaleur (20) qui est disposée sur un côté extérieur de la gaine (16) et qui est en contact de transfert de chaleur avec celle-ci,
**caractérisé en ce que** la formation de surface de transfert de chaleur (20) est reliée à la gaine (16) par friction en s'appuyant ou en se rétractant.

2. Unité de chauffage de gaz d'échappement selon la revendication 1, **caractérisée en ce que** la gaine (16) est constituée d'un matériau métallique, ou/et que la formation de surface de transfert de chaleur (20) est en outre reliée à la gaine (16) par une liaison de substance, de préférence par soudage ou brasage.

3. Unité de chauffage de gaz d'échappement selon la revendication 1 ou 2, **caractérisée en ce que** la formation de surface de transfert de chaleur (20) comprend au moins un élément de transfert de chaleur (22), qui entoure l'élément conducteur de chauffage de la gaine (12) de manière hélicoïdale et fournit de préférence des surfaces de transfert de chaleur (24, 26) qui sont à angle droit par rapport à une paroi circonférentielle extérieure de la gaine,
de préférence
dans lequel l'élément conducteur chauffant de la gaine (12) est configuré en s'étendant de manière linéaire dans au moins certaines zones, et/ou l'élément conducteur chauffant de la gaine (12) est configuré en s'étendant de manière hélicoïdale et/ou en forme de spirale dans au moins certaines zones, et/ou l'élément conducteur chauffant de la gaine (12) est configuré en s'étendant en méandres dans au moins certaines zones.

4. Unité de chauffage de gaz d'échappement selon la revendication 1 ou 2, **caractérisée en ce que** la formation de surface de transfert de chaleur (20) comprend plusieurs éléments de transfert de chaleur (56) en forme de plaques, qui sont disposés à distance les uns des autres.

5. Unité de chauffage de gaz d'échappement selon la revendication 4, **caractérisée en ce que** les éléments de transfert de chaleur (56) sont disposés essentiellement parallèlement les uns aux autres, et/ou **en ce qu'**un élément d'espacement (66), qui est en contact avec les éléments de transfert de chaleur (56) et/ou est relié à ceux-ci, est disposé entre au moins deux éléments de transfert de chaleur (56), de préférence entre tous les éléments de transfert de chaleur (56) directement adjacents les uns aux autres,
de préférence
dans lequel au moins un élément d'espacement (66), de préférence chaque élément d'espacement (66) recouvre essentiellement entièrement les éléments de transfert de chaleur (56) disposés de part et d'autre de celui-ci dans les zones de surface de ceux-ci, situées en face l'une de l'autre, au moins un élément d'espacement (66), de préférence chaque élément d'espacement (66) est configuré avec une structure ondulée et est en contact avec les éléments de transfert de chaleur (56) disposés de part et d'autre de celui-ci avec des zones de crête d'onde (68), et/ou est relié à ceux-ci, et/ou au moins un élément d'espacement (66), de préférence chaque élément d'espacement (66) est perméable aux gaz d'échappement.

6. Unité de chauffage de gaz d'échappement selon l'une des revendications 4 ou 5, **caractérisée en ce qu'**au moins un évidement de réception d'élément conducteur chauffant de la gaine (58), de préférence une pluralité d'évidements de réception d'élément conducteur chauffant de la gaine (58) recevant au moins un élément conducteur chauffant de la gaine (12) est/sont prévu(s) dans au moins un élément de transfert de chaleur (56), de préférence dans chaque élément de transfert de chaleur (56).

7. Unité de chauffage de gaz d'échappement selon la revendication 6, **caractérisée en ce qu'**au moins un évidement de réception d'élément conducteur chauffant de la gaine (58), de préférence chaque évidement de réception d'élément conducteur chauffant de la gaine (58), est ouvert vers une zone de bord circonférentiel d'élément de transfert de chaleur (60, 64), et/ou **en ce que** dans au moins un élément de transfert de chaleur (56), de préférence dans chaque élément de transfert de chaleur (56) au moins un évidement de réception d'élément conducteur chauffant de la gaine (58), de préférence une pluralité d'évidements de réception d'élément conducteur chauffant de la gaine (58), est/sont prévu(s) respectivement dans les zones de bord circonférentiel d'élément de transfert de chaleur (60, 64), qui sont situés à l'opposé l'un de l'autre ou qui s'étendent en formant un angle l'un par rapport à l'autre, ou/et qu'au moins une paire d'éléments de transfert de chaleur (62), de préférence plusieurs paires d'éléments de transfert de chaleur (62) est/sont prévues, dans lequel l'élément conducteur chauffant de la gaine (12) est positionné de manière à s'engrener avec au moins un évidement de réception d'élément conducteur chauffant de la gaine (58) de chaque élément de transfert de chaleur (56) de ladite au moins une paire d'éléments de transfert de chaleur (62).

8. Unité de chauffage de gaz d'échappement selon l'une des revendications précédentes, **caractérisée en ce qu'**une surface de transfert de chaleur de la formation de surface de transfert de chaleur (20) est formée avec un matériau catalytiquement actif (72) dans au moins certaines zones.

9. Unité de chauffage de gaz d'échappement selon la revendication 8, **caractérisée en ce qu'**au moins un élément de transfert de chaleur (70), de préférence chaque élément de transfert de chaleur (70) de la formation de surface de transfert de chaleur est revêtu d'un matériau catalytiquement actif (72),
de préférence
dans lequel le ou les éléments de transfert de chaleur (70) sont constitués d'un matériau en aluminium, de préférence d'un alliage d'aluminium.

10. Unité de chauffage de gaz d'échappement selon l'une des revendications 8 ou 9, **caractérisée en ce que** le matériau catalytiquement actif (72) comprend :
- du platine, ou/et
- du palladium, ou/et
- du rhodium.

11. Unité de chauffage de gaz d'échappement selon l'une des revendications 8 à 10, **caractérisée en ce que** le matériau catalytiquement actif (72) comprend :
- un matériau zéolithique à base de fer, ou/et
- un matériau zéolithique à base de cuivre, ou/et
- un matériau à base d'oxyde de vanadium.

12. Système de gaz d'échappement pour un moteur à combustion interne, comprenant au moins une unité de chauffage de gaz d'échappement (10) selon l'une des revendications précédentes, qui est disposée dans un conduit d'écoulement de gaz d'échappement (36).

13. Système de gaz d'échappement selon la revendication 12, **caractérisé en ce que** l'unité de chauffage de gaz d'échappement (10) est disposée dans un sens d'écoulement de gaz d'échappement (A) dans le conduit d'écoulement de gaz d'échappement (36) en amont d'une unité de traitement de gaz d'échappement (38), de préférence une unité de catalyseur (40) ou une unité de filtre à particules.

14. Système de gaz d'échappement selon la revendication 13, s'il est renvoyé à l'une des revendications 8 à 11, **caractérisé en ce que** le matériau catalytique actif (72) et l'unité de catalyseur (40) sont associés au même type de catalyseur.

15. Système de gaz d'échappement selon l'une des revendications 12 à 14, **caractérisé en ce qu'**un dispositif de libération d'hydrocarbures (80) est associé à au moins une unité de chauffage de gaz d'échappement (10) pour libérer des hydrocarbures dans le flux de gaz d'échappement en amont par rapport à l'élément de chauffage de gaz d'échappement (10).
